# EUROPEAN PATENT SPECIFICATION

(11) **EP 2 548 924 B1**
(45) Date of publication and mention of the grant of the patent: **12.11.2014**
(21) Application number: 12177112.5
(22) Date of filing: 19.07.2012
(51) Int. Cl.: C08L 83/04, C09D 183/04, B28C 5/08, B28C 7/14, B28C 5/42

(54) **METHOD OF APPLYING A COMPOSITION FOR COATING SURFACES INTENDED TO MAKE CONTACT WITH CEMENT PASTE IN THE FLUID STATE**
VERFAHREN ZUM AUFBRINGEN EINER ZUSAMMENSETZUNG ZUR BESCHICHTUNG VON OBERFLÄCHEN, DIE FÜR DEN KONTAKT MIT FLÜSSIGER ZEMENTPASTE BESTIMMT SIND
PROCÉDÉ D'APPLICATION D'UNE COMPOSITION POUR LE REVÊTEMENT DE SURFACES DESTINÉES AU CONTACT AVEC UNE PÂTE FLUIDE DE CIMENT

(30) Priority: 21.07.2011 IT VR20110155
(43) Date of publication of application: 23.01.2013
(73) Proprietor: LED Srl, 25024 Leno, Frazione Porzano (BS) (IT)
(72) Inventor: Micheletti, Emilio, 25024 LENO, Frazione PORZANO BS (IT)
(74) Representative: Modiano, Micaela Nadia

(56) References cited:
- GB-A- 1 098 487
- JP-A- 59 029 064
- JP-A- 2000 080 354
- JP-B- 49 012 092
- US-A1- 2004 050 297
- US-A1- 2006 281 889

## Description

The present invention relates to a method of applying a composition for coating surfaces intended to make contact with cement paste in the fluid state such as, for example, the inner walls of the drum of a mixer or of a truck mixer.

Nowadays, every time a mixer performs the discharge of cement paste fluid, it is common practice to proceed with washing the inner surface by means of water jets.

It is evident that such a method has at least three considerable drawbacks.

First, it is necessary to proceed with a considerable number of daily washes with evident consumption of time and water.

Secondly, it is necessary to dispose of the water used for cleaning as a pollutant liquid, with consequent problems from an environmental viewpoint.

Thirdly, the drum of a truck mixer requires continuous washing of the walls with water during the return trip from the construction site where the emptying took place, with consequent waste in terms of electricity, fuel, and wear of the blades.

Document JP 59029064 discloses, for example, a coating composition for improving abrasion resistance to a concrete mixer.

The aim of the present invention is to provide a method of applying a composition for coating surfaces intended to make contact with cement paste in the fluid state which is capable of eliminating the above-mentioned drawbacks.

Within this aim, an object of the present invention is to provide a method of applying a composition for coating surfaces intended to make contact with cement paste in the fluid state which prevents the adhesion of the cement paste to the inner walls of the mixers thus facilitating the separation thereof in the discharge step.

This aim and this and other objects which will become more apparent hereinafter are achieved by a method of applying a composition for coating surfaces intended to make contact with cement paste in the fluid state according to claim 1.

Further characteristics and advantages of the invention will become more apparent from the description of some preferred, but not exclusive, embodiments of a composition for coating surfaces intended to make contact with cement paste in the fluid state according to the present invention.

In the embodiments that follow, individual characteristics shown in relation to specific examples may in reality be interchanged with other, different characteristics, existing in other embodiments.

The present invention relates to a composition for coating surfaces intended to make contact with cement paste in the fluid state.

In particular, the composition comprises a silicone-based polymer in a percentage comprised between 12% and 40% as an active ingredient in a hydrocarbon solvent.

Preferably, the composition comprises a silicone-based polymer in a percentage comprised between 20% and 40% as an active ingredient in a isoparaffinic solvent.

In practice, the dry weight of the silicone-based polymer is comprised between 20% and 40% of the total weight of the composition.

Advantageously, the silicone-based polymer comprises a polyalkylsiloxane.

Conveniently, the polyalkylsiloxane has a molecular weight which is comprised between 5,000 g/mol and 20,000 g/mol, and preferably between 10,000 g/mol and 11,000 g/mol.

Advantageously, the hydrocarbon solvent is selected from the group comprising an isoparaffinic solvent, a naphthenic solvent, a diesel fuel-based solvent, a white spirit or mixtures thereof.

It has been found to be particularly advantageous to use a silicone-based polymer in a percentage comprised between 22% and 30% as an active ingredient in an isoparaffinic solvent.

More precisely, the polyalkylsiloxane comprises a polydimethylsiloxane.

### EXAMPLE 1

The inner surface of the drum of a truck mixer was cleaned and dried.

A composition was prepared by mixing polydimethylsiloxane in a percentage of 15% by dry weight of the total weight of the composition with isoparaffinic solvent.

After applying the composition to the inner surface of a drum of a truck mixer, it was found that, after 6 filling/emptying cycles in a 48-hour period, no residues of cement paste were deposited on the inner surface of the drum.

### EXAMPLE 2

The inner surface of the drum of a truck mixer was cleaned and dried.

A composition was prepared by mixing polydimethylsiloxane in a percentage of 25% by dry weight of the total weight of the composition with isoparaffinic solvent.

After applying the composition to the inner surface of the drum, it was found that no residues of cement paste were deposited on the inner surface of the drum for 12 continuous cycles or up to 48 hours if fewer than 12 cycles were performed in such time period.

It was found that the best results are achieved by renewed treating, after washing and drying the inner surface of the drum, the inner surface of the drum with a new application of the composition after 10-15 cycles or, in any case, within 48 hours.

### EXAMPLE 3

The inner surface of the drum of a truck mixer was cleaned and dried.

A composition was prepared by mixing polydimethylsiloxane in a percentage of 28% by dry weight of the total weight of the composition with isoparaffinic solvent.

After proceeding as in example 2, the same results were found in terms of duration, in terms of both cycles and time.

The present invention furthermore relates to a method for applying a composition for coating surfaces intended to come into contact with cement paste in the fluid state, **characterized in that** it comprises:
- a step of application of the composition on the dry and clean inner surface of a container for the production and/or transport of concrete in the fluid state,
where the composition comprises a silicone-based polymer in a percentage comprised between 12% and 40% as an active ingredient in a solvent selected from the group comprising a hydrocarbon solvent.

Delving deeper into the details, the container comprises a drum of a mixer or of a truck mixer or a receptacle or a fixed premixing tank for the production of concrete.

In fact, in some cases, the concrete is produced in mixers or premixers which are loaded with sand, water and cement.

In this case the application of the composition is performed, advantageously, by way of nebulization or spraying of the composition on the inner surface of the receptacle or of the premixing tank.

According to a preferred embodiment, the method comprises:
- a step of application of the composition on the dry and clean inner surface of a drum of a mixer or truck mixer;
- starting the movement of the drum about its own axis of rotation in order to make the composition adhere to the inner surface of the drum;
- discharging the excess composition into a storage container.

In particular, the composition comprises a silicone-based polymer in a percentage comprised between 20% and 40% as an active ingredient in a hydrocarbon solvent.

Advantageously, the silicone-based polymer comprises a polyalkylsiloxane and, for example, a polymethylsiloxane.

The polyalkylsiloxane has a molecular weight which is comprised between 5,000 g/mol and 20,000 g/mol, and, more preferably, a molecular weight which is comprised between 10,000 g/mol and 11,000 g/mol.

Conveniently, the hydrocarbon solvent is selected from the group comprising an isoparaffinic solvent, a naphthenic solvent, a diesel fuel-based solvent, a white spirit or mixtures thereof.

According to a preferred embodiment, the composition comprises a silicone-based polymer in a percentage comprised between 22% and 30% as an active ingredient in an isoparaffinic solvent.

In particular, the application is dispensed by way of a pump, which is advantageously provided with an adapted supporting bracket, in a quantity substantially equal to 200 kg for each drum.

It has been found that over 90% of the composition dispensed are recovered in the storage container.

Inside the storage container a water-based fluid can be mixed which precipitates, together with any residues of cement, on the bottom of the storage container so as to be capable of being drawn off, together with the cement, by way of a discharge duct formed on the bottom of the container.

Similarly, the drum of the mixer or of the truck mixer can be associated with a spraying circuit that is intended, on command, to draw from a storage tank of the composition, which is also advantageously supported by the mixer or by the truck mixer.

In this manner, once the inner surface of the drum is clean and dry, it will be possible to directly apply the composition without the need to use pumps or similar devices.

All the characteristics of the invention indicated as advantageous, convenient or similar may also be missing or be substituted by equivalent characteristics.

The invention, thus conceived, is susceptible of numerous modifications and variations, all of which are within the scope of the appended claims.

Thus, for example, the composition can also be used on the outer surfaces of the drum so as to prevent the cement from adhering to the outer surfaces, during the steps of discharging the cement paste.

In practice it has been found that in all the embodiments the invention has achieved the set aim and objects.

Moreover, all the details may be substituted by other, technically equivalent elements.

The content of Italian patent application no. VR2011A000155, the priority of which is claimed in the present application, is incorporated as a reference.

## Claims

1. A method for applying a composition for coating surfaces intended to come into contact with cement paste in the fluid state, **characterized in that** it comprises:
- a step of application of said composition on the dry and clean inner surface of a container for the production and/or transport of concrete in the fluid state,
where said composition comprises a silicone-based polymer in a percentage comprised between 12% and 40% by weight as an active ingredient in a solvent selected from the group comprising a hydrocarbon solvent.

2. The method of applying a composition according to claim 1, **characterized in that** said container comprises a drum of a mixer or of a truck mixer or a receptacle or a fixed premixing tank for the production of concrete.

3. The application method according to claim 2, **characterized in that** it comprises:
- a step of application of said composition on the dry and clean inner surface of a drum of a mixer or truck mixer;
- starting the movement of said drum about its own axis of rotation in order to make said composition adhere to the inner surface of said drum;
- discharging the excess composition into a storage container.

4. The application method according to claim 2, **characterized in that** it comprises the application of said composition by way of nebulization or spraying on the inner surface of said receptacle or of said premixing tank.

5. The method of applying a composition according to claim 1, **characterized in that** said silicone-based polymer comprises a polyalkylsiloxane.

6. The method of applying a composition according to one or more of the preceding claims, **characterized in that** said hydrocarbon solvent is selected from the group comprising an isoparaffinic solvent, a naphthenic solvent, a diesel fuel-based solvent, a white spirit or mixtures thereof.

7. The method of applying a composition according to one or more of the preceding claims, **characterized in that** said polyalkylsiloxane comprises a polymethylsiloxane.

8. The method of applying a composition according to one or more of the preceding claims, **characterized in that** it comprises a silicone-based polymer comprised between 22% and 30% by weight as an active ingredient in an isoparaffinic solvent.

9. The use of a composition to coat a surface intended to come into contact with cement paste in the fluid state, **characterized in that** it comprises application of said composition on the dry and clean inner surface of a container for the production and/or transport of concrete in the fluid state, and wherein said composition comprises a silicone-based polymer in a percentage comprised between 12% and 40% by weight as an active ingredient in a solvent selected from the group comprising a hydrocarbon solvent.

10. The use of a composition according to claim 9, **characterized in that** said surface intended to come into contact with cement paste in the fluid state comprises the inner surface of a drum of a mixer or truck mixer or the inner surface of a receptacle or a fixed premixing tank.

11. The use of a composition according to one of the claims 9-10, **characterized in that** said silicone-based polymer comprises a polyalkylsiloxane, preferably a polymethylsiloxane.

12. The use of a composition according to one of the claims 9 - 11, **characterized in that** said hydrocarbon solvent is selected from the group comprising an isoparaffinic solvent, a naphthenic solvent, a diesel fuel-based solvent, a white spirit or mixtures thereof.

## Patentansprüche

1. Ein Verfahren zum Anbringen einer Zusammensetzung zur Beschichtung von Oberflächen, die mit Zementleim in flüssigem Zustand in Kontakt kommen sollen, **dadurch gekennzeichnet, dass** es folgendes umfasst:
- einen Schritt Aufbringen der Zusammensetzung auf die trockene und saubere innere Oberfläche eines Behälters für die Produktion und/oder den Transport von Gießbeton in flüssigem Zustand,
worin die Zusammensetzung ein Silikon-basiertes Polymer umfasst, in einem Prozentsatz einschließlich zwischen 12 Gewichtsprozent und 40 Gewichtsprozent als einen aktiven Inhaltsstoff in einem Lösungsmittel, gewählt aus der Gruppe bestehend aus einem Kohlenwasserstofflösungsmittel.

2. Das Verfahren des Anbringens einer Zusammensetzung gemäß Anspruch 1, **dadurch gekennzeichnet, dass** der Behälter eine Trommel von einem Mischer oder von einem Liefermischer oder einen Aufnahmebehälter oder einen fixierten Vormischtank für die Produktion von Gießbeton umfasst.

3. Das Aufbringungsverfahren gemäß Anspruch 2, **dadurch gekennzeichnet, dass** es folgendes umfasst:
- einen Schritt Aufbringen der Zusammensetzung auf die trockene und saubere innere Oberfläche einer Trommel von einem Mischer oder Liefermischer;
- Starten der Bewegung der Trommel um ihre eigene Rotationsachse, damit die Zusammensetzung an die innere Oberfläche der Trommel anhaftet;
- Abführen der überschüssigen Zusammensetzung in einen Lagerungsbehälter.

4. Das Aufbringungsverfahren gemäß Anspruch 2, **dadurch gekennzeichnet, dass** es das Aufbringen der Zusammensetzung mittels Zerstäubung oder Spritzung auf die innere Oberfläche des Aufnahmebehälters oder des Vormischtanks umfasst.

5. Das Verfahren des Anbringens einer Zusammensetzung gemäß Anspruch 1, **dadurch gekennzeichnet, dass** das Silikon-basierte Polymer eine Polyalkylsiloxan umfasst.

6. Das Verfahren der Aufbringung einer Zusammensetzung gemäß einem oder mehreren der vorhergehenden Ansprüche, **dadurch gekennzeichnet, dass** das Kohlenwasserstofflösungsmittel gewählt ist aus der Gruppe umfassend ein isoparaffines Lösungsmittel, ein Naphthenlösungsmittel, ein Dieselkraftstoff-basiertes Lösungsmittel, ein Lackbenzin oder Mischungen daraus.

7. Das Verfahren der Aufbringung einer Zusammensetzung gemäß einem oder mehreren der vorhergehenden Ansprüche, **dadurch gekennzeichnet, dass** das Polyalkylsiloxan ein Polymethylsiloxan umfasst.

8. Das Verfahren der Aufbringung einer Zusammensetzung gemäß einem oder mehreren der vorhergehenden Ansprüche, **dadurch gekennzeichnet, dass** es ein Silikon-basiertes Polymer einschließlich zwischen 22 Gewichtsprozent und 30 Gewichtsprozent als einen aktiven Inhaltsstoff in einem isoparaffinen Lösungsmittel umfasst.

9. Die Verwendung einer Zusammensetzung, um eine Oberfläche zu beschichten, die mit Zementleim in flüssigem Zustand in Kontakt kommen soll, **dadurch gekennzeichnet, dass** sie die Aufbringung der Zusammensetzung auf die trockene und saubere innere Oberfläche eines Behälters für die Produktion und/oder den Transport von Gießbeton in flüssigem Zustand umfasst, und worin die Zusammensetzung ein Silikon-basiertes Polymer umfasst in einem Prozentsatz einschließlich zwischen 12 Gewichtsprozent und 40 Gewichtsprozent als einen aktiven Inhaltsstoff in einem Lösungsmittel gewählt aus der Gruppe umfassend ein Kohlenwasserstofflösungsmittel.

10. Die Verwendung einer Zusammensetzung gemäß Anspruch 9, **dadurch gekennzeichnet, dass** die Oberfläche, die mit Zementleim in flüssigem Zustand in Kontakt kommen soll, die innere Oberfläche einer Trommel von einem Mischer oder Liefermischer oder die innere Oberfläche von einem Aufnahmebehälter oder einem fixierten Vormischtank umfasst.

11. Die Verwendung einer Zusammensetzung gemäß einem der Ansprüche 9-10, **dadurch gekennzeichnet, dass** das Silikon-basierte Polymer ein Polyalkylsiloxan, vorzugsweise ein Polymethylsiloxan, umfasst.

12. Die Verwendung einer Zusammensetzung gemäß einem der Ansprüche 9-11, **dadurch gekennzeichnet, dass** das Kohlenwasserstofflösungsmittel gewählt ist aus der Gruppe umfassend ein isoparaffines Lösungsmittel, ein Naphthenlösungsmittel, ein Dieselkraftstoff-basiertes Lösungsmittel, ein Lackbenzin oder Mischungen daraus.

## Revendications

1. Procédé d'application d'une composition pour le revêtement de surfaces destinées à entrer en contact avec une pâte de ciment à l'état fluide, **caractérisé en ce qu'**il comprend :
- une étape d'application de ladite composition sur la surface interne propre et sèche d'un récipient destiné à la fabrication et/ou au transport de béton à l'état fluide,
où ladite composition comprend un polymère à base de silicone dans une proportion comprise entre 12 % et 40 % en poids en tant que substance active dans un solvant choisi dans le groupe comprenant un solvant hydrocarboné.

2. Procédé d'application d'une composition selon la revendication 1, **caractérisé en ce que** ledit récipient comprend un tambour d'un malaxeur ou d'un camion-malaxeur ou un réceptacle ou une cuve de pré-malaxage fixe pour la fabrication de béton.

3. Procédé d'application d'une composition selon la revendication 2, **caractérisé en ce qu'**il comprend :
- une étape d'application de ladite composition sur la surface interne propre et sèche du tambour d'un malaxeur ou d'un camion-malaxeur ;
- la mise en mouvement dudit tambour sur son propre axe de rotation afin que ladite composition adhère à la surface interne dudit tambour ;
- l'évacuation de l'excédent de composition dans un récipient de stockage.

4. Procédé d'application d'une composition selon la revendication 2, **caractérisé en ce qu'**il comprend l'application de ladite composition par nébulisation ou par pulvérisation sur la surface interne dudit réceptacle ou de ladite cuve de pré-malaxage.

5. Procédé d'application d'une composition selon la revendication 1, **caractérisé en ce que** ledit polymère à base de silicone comprend un polyalkylsiloxane.

6. Procédé d'application d'une composition selon une ou plusieurs des revendications précédentes, **caractérisé en ce que** ledit solvant hydrocarboné est choisi dans le groupe comprenant un solvant isoparaffinique, un solvant naphténique, un solvant à base de carburant diesel, un white-spirit ou leurs mélanges.

7. Procédé d'application d'une composition selon une ou plusieurs des revendications précédentes, **caractérisé en ce que** ledit polyalkylsiloxane comprend un polyméthylsiloxane.

8. Procédé d'application d'une composition selon une ou plusieurs des revendications précédentes, **caractérisé en ce qu'**il comprend un polymère à base de silicone compris entre 22 % et 30 % en poids en tant que substance active dans un solvant isoparaffinique.

9. Utilisation d'une composition pour enduire une surface destinée à entrer en contact avec une pâte de ciment à l'état fluide, **caractérisée en ce qu'**elle comprend l'application de ladite composition sur la surface interne propre et sèche d'un récipient destiné à la fabrication et/ou au transport de béton à l'état fluide, et dans laquelle ladite composition comprend un polymère à base de silicone dans une proportion comprise entre 12 % et 40 % en poids en tant que substance active dans un solvant choisi dans le groupe comprenant un solvant hydrocarboné.

10. Utilisation d'une composition selon la revendication 9, **caractérisée en ce que** ladite surface destinée à entrer en contact avec une pâte de ciment à l'état fluide comprend la surface interne du tambour d'un malaxeur ou d'un camion-malaxeur ou la surface interne d'un réceptacle ou d'une cuve de pré-malaxage fixe.

11. Utilisation d'une composition selon l'une des revendications 9 ou 10, **caractérisée en ce que** ledit polymère à base de silicone comprend un polyalkylsiloxane, de préférence un polyméthylsiloxane.

12. Utilisation d'une composition selon l'une des revendications 9 à 11, **caractérisée en ce que** ledit solvant hydrocarboné est choisi dans le groupe comprenant un solvant isoparaffinique, un solvant naphténique, un solvant à base de carburant diesel, un white-spirit ou leurs mélanges.
